# EUROPÄISCHE PATENTSCHRIFT

(11) **EP 0 830 832 B1**
(45) Veröffentlichungstag und Bekanntmachung des Hinweises auf die Patenterteilung: **31.12.2008**
(21) Anmeldenummer: 97119530.0
(22) Anmeldetag: 26.04.1995
(51) Int. Cl.: A47L 9/28

(54) **Staubsauger mit einer Einrichtung zur Erkennung der Nichtbenutzung**
Vacuum cleaner with a device for non-operation recognition
Aspirateur avec dispositif pour la reconnaissance de la non-utilisation

(30) Priorität: 27.04.1994 DE 4414695; 04.08.1994 DE 4427639
(43) Veröffentlichungstag der Anmeldung: 25.03.1998
(62) Teilanmeldung aus: 95917960.7
(73) Patentinhaber: Vorwerk & Co. Interholding GmbH, 42275 Wuppertal (DE)
(72) Erfinder: Cholewa, Lothar, 44627 Herne (DE); Herrmann, Thomas, 45772 Marl (DE); Jacobs, Carsten, 58285 Gevelsberg (DE); Caldewey, Uwe, 58454 Witten (DE)
(74) Vertreter: Müller, Enno

(56) Entgegenhaltungen:
- EP-A- 0 277 927
- EP-A- 0 499 235
- DE-U- 9 217 416
- FR-A- 2 197 555
- PATENT ABSTRACTS OF JAPAN vol. 015, no. 031 (C-0798), 24.Januar 1991 & JP 02 268719 A (MATSUSHITA ELECTRIC IND CO LTD), 2.November 1990,

## Beschreibung

Die Erfindung betrifft einen Staubsauger mit einem, eine Saugleistung erbringenden Elektromotor, wobei bei einer durch Stillstand des Gerätes angezeigten Nichtbenutzung eine Verminderung der Leistung des Elektromotors auf eine Minimalleistung erfolgt.

Derartige elektromotorisch betriebene Staubsauger sind bekannt. So ist bspw. aus der JP-A-2268719 ein Staubsauger bekannt, bei welchem die Stillstandserkennung eine Interpretation der von einem Drucksensor ermittelten Messwerte ist. In Abhängigkeit dieser Ergebnisse ist die Motorleistung beeinflussbar.

Aufgabe der vorliegenden Erfindung ist es, einen gattungsgemäßen Staubsauger hinsichtlich seiner Gebrauchseigenschaften zu verbessern.

Gelöst ist die Aufgabe durch die im Hauptanspruch angegebene Erfindung.

Die Unteransprüche stellen vorteilhafte Weiterbildungen dar.

Hinsichtlich dieser Ausgestaltung ist ein gattungsgemäßer Staubsauger angegeben, der beim Saugen eine verbesserte Gebrauchseigenschaft aufweist. Dies ist dadurch gelöst, dass die bei einer durch Stillstand des Gerätes angezeigte Nichtbenutzung durch einen Beschleunigungssensor erfasst wird und die Verminderung der Leistung nach Ablauf einer vordefinierten Verzögerung erfolgt. Bei Stillstand des eingeschalteten Gerätes erfolgt nach einer, bspw. werkseitig eingestellten Reaktionszeit eine Verminderung der Leistung des Elektromotors auf eine Minimalleistung. Die Reaktionszeit kann bspw. zwei bis vier Sekunden betragen. Bei angezeigter Nichtbenutzung wird somit zum einen die Geräuschentwicklung reduziert und zum anderen der zu pflegende Boden geschont.

Wird nach Stillstand des Gerätes letzteres wiederum bewegt, so wird eine Benutzung angezeigt, womit die Leistung des Elektromotors wiederum auf die über das Einstellpotentiometer voreingestellte Leistung erhöht wird. Der Staubsauger steht folglich bei angezeigter Nichtbenutzung in Bereitschaft. Die Verminderung der Leistung des Elektromotors auf die Minimalleistung bei Stillstand des Gerätes kann bspw. über einen Schalter erfolgen, welcher von dem aktiven Einstellpotentiometer auf einen festen Widerstand, welcher die Minimalleistung definiert, umschaltet. Es ist jedoch auch eine Lösung mittels eines integrierten Schaltkreises denkbar. In einer vorteilhaften Weiterbildung des Erfindungsgegenstandes ist vorgesehen, daß die Verminderung der Leistung des Elektromotors weiter in Abhängigkeit eines Signals eines Schmutzsensors erfolgt. Die zuvor beschriebene Verminderung der Leistung des Elektromotors ist somit nicht nur abhängig von einer angezeigten Nichtbenutzung des Staubsaugers, sondern auch von einem Signal eines Schmutzsensors. Erfaßt der Schmutzsensor einen Bereich von geringer bis normaler Verschmutzung des zu pflegenden Bodens, so erfolgt die Verminderung der Leistung des Elektromotors auf eine Minimalleistung. Erfaßt jedoch der Schmutzsensor einen Bereich von erhöhter Verschmutzung, so führt dies zu einer Erhöhung der Leistung des Elektromotors bis zur Maximalleistung, um den erfaßten Bereich des zu pflegenden Bodens verstärkt zu saugen. Die Anzeige der Nichtbenutzung kann dadurch realisiert sein, daß diese durch eine Überwachung einer Laufrolle des Gerätes erfaßbar ist. Ein entsprechender Sensor oder Abtaster erfaßt während des Betriebes bei eingeschaltetem Staubsauger die Drehbewegung einer Laufrolle des Gerätes. Bei Stillstand der Laufrolle, nach Ablauf einer entsprechenden Reaktionszeit, gibt dieser Sensor ein Signal zur Verminderung der Leistung des Elektromotors. Die Erfassung der Drehbewegung einer Laufrolle kann bspw. dadurch gelöst sein, daß an der Laufrolle eine gezahnte Blechscheibe angebracht wird, die das magnetische Feld eines Hallsensors durch ihre ferromagnetische Eigenschaft beeinflußt. Diese Änderung des magnetischen Feldes und damit der Hallspannung am Sensor kann elektronisch ausgewertet werden, so daß durch jeden Zahn ein Impuls erzeugt wird. Weiterhin kann auch eine Gabel- oder Reflexlichtschranke verwendet werden. Durch eine gezahnte Scheibe, die sich zusammen mit dem Rad dreht, wird der Lichtstrahl einer Lichtquelle unterbrochen bzw. reflektiert. Das reflektierte bzw. transmittierte Licht wird von einem lichtempfindlichen Element empfangen und elektrisch ausgewertet, so daß auch hier durch jeden Zahn der Scheibe ein Impuls erzeugt wird. Weiterhin besteht eine Möglichkeit der Ausgestaltung darin, auf einer sich mitdrehenden Welle des Rades ein Nockenrad zu befestigen, wobei einzelne Nocken von einem Mikroschalter abgetastet werden. Eine sehr einfache und kostengünstige Lösung ergibt sich Einsetzen eines mehrpolig magnetisierten Magnetringes in der Rolle. Durch das magnetische Feld des Magneten wird ein sich in der Nähe befindender Reedkontakt geschlossen bzw. geöffnet. Ebenso sind andere Sensoren geeignet, die jeweils eine Drehbewegung in elektrische Pulse wandeln können. Die Auflösung der Sensoren hängt von der Anzahl der Zähne einer Zahnscheibe bzw. von der Anzahl der Magnetpole eines Magnetringes ab. Je größer die Anzahl ist, desto höher ist die Anzahl der Impulse pro Radumdrehung. Jeder Impuls entspricht damit einer bestimmten zurückgelegten Strecke. Alle aufgeführten Sensoren bzw. Abtaster haben die Eigenschaft, daß zwei verschiedene stabile Zustände angezeigt werden. Je nach Stellung der Rolle ergibt sich ein anderes Ausgangssignal, womit dieses Signal nicht direkt eine Schaltfunktion ausführen kann. Vielmehr muß eine Elektronik nachgeschaltet werden. Letztere besteht aus einem flankengetriggerten monostabilen Multivibrator, dessen Zeit beliebig variiert werden kann. Der Ausgang des Multivibrators liefert das erforderliche Schaltsignal. Außerdem stellt diese Schaltung sicher, daß das Schaltsignal bereits mit dem ersten Impuls nach dem Stillstand wieder aktiv ist. Das bedeutet, daß über die Auflösung des Sensors die minimal erforderliche Strecke bestimmt wird, die erforderlich ist, um das Schaltsignal zu aktivieren. Für den genannten Erfindungsgegenstand läßt sich bspw. ein Sensor verwenden, der pro Radumdrehung vier Impulse liefert. Bedingt durch diese Ausgestaltung kann über eine Triacsteuerung oder ein Relais der Motor des Gerätes abgeschaltet werden. Andere Schaltfunktionen sind ebenso denkbar. In einer Weiterentwicklung ist vorgesehen, daß bei Benutzung eines motorgetriebenen Vorsatzgerätes eine angezeigte Nichtbenutzung eine Abschaltung des Elektromotors des Vorsatzgerätes bewirkt. Zusätzlich zur Verminderung der Leistung des Elektromotors auf eine Minimalleistung kann somit auch eine Abschaltung des Elektromotors des Vorsatzgerätes bei Nichtbenutzung erfolgen, womit einer Überbeanspruchung des zu pflegenden Bodens bei Stillstand des Staubsaugers entgegengewirkt wird. Ein derartiges motorgetriebenes Vorsatzgerät kann in bekannter Weise einen Blockierschutz aufweisen, welcher ein Abschalten des Vorsatzgerätemotors bei dessen Blockierung bewirkt. Dies kann bspw. dann erfolgen, wenn Teppichfransen oder dgl. sich in eine Bürste des Vorsatzgerätes eindrehen. Beim Blockieren der Vorsatzgerätebürste oder dgl. wird der Elektromotor des Vorsatzgerätes abgeschaltet. Hierbei wird ein Signal zur Verminderung der Leistung des die Saugleistung erbringenden Elektromotors erzeugt. Weiterhin kann der Erfindungsgegenstand in vorteilhafter Weise dahingehend ausgebildet sein, daß die Nichtbenutzung durch einen Beschleunigungssensor erfaßbar ist. Die Beschleunigungen, die beim normalen Saugen auf Teppichböden oder dergleichen auftreten, werden genutzt, um eine Benutzung des Gerätes anzuzeigen. Treten keine Beschleunigungen auf, so meldet der Beschleunigungssensor eine Nichtbenutzung des Gerätes, was zu einer Verminderung der Leistung des Elektromotors auf die Minimalleistung und bei motorgetriebenen Vorsatzgeräten eine Abschaltung des dort angeordneten Elektromotors führt. Es ist wünschenswert, unterbestimmten Bedingungen den Elektromotor eines motorgetriebenen Vorsatzgerätes dauerhaft zu betreiben. So ist aus Sicherheitsgründen vorgesehen, daß in dem Beschleunigungssensor ein Lagesensor integriert ist. Dieser Lagesensor bewirkt ein sofortiges Einschalten des Elektromotors des vorsatzgerätes, sobald letzteres aus der üblichen Arbeitslage, d.h. die beim Saugen übliche horizontale Lage, heraus verschwenkt wird. Dies insbesondere dann, wenn zu Reinigungsarbeiten das Vorsatzgerät in eine Überkopfstellung gebracht wird, bei nicht abgezogenem Netzstekker. Der Beschleunigungssensor zeigt hierbei eine Nicht benutzung an, was zu einem Abschalten des Elektromotors führt. Um hier einem plötzlichen Einschalten des Elektromotors und einem damit einhergehenden plötzlichen Drehen der Vorsatzbürsten während der Reinigungsarbeiten entgegenzuwirken, schaltet der Elektromotor bedingt durch ein entsprechendes Signal des Lagesensors sofort ein, sobald das Vorsatzgerät die normale Arbeitslage verläßt. Dem Benutzer soll hiermit ein eindeutiges Signal zum Ziehen des Netzsteckers gegeben werden. Motorgetriebene Vorsatzgeräte können zum Reinigen bzw. zum Wechseln der Bürsten mittels eines abnehmbaren bzw. abschwenkbaren Gehäuseteiles geöffnet werden. Um hier eine erhöhte Sicherheit zu bieten, wird vorgeschlagen, daß der Beschleunigungssensor bzw. der Lagesensor zugleich ein Gehäuse-Öffnungssensor ist. Wird demnach bei nicht gezogenem Netzstecker das Gehäuse des Vorsatzgerätes geöffnet, so fährt der Elektromotor des Vorsatzgerätes sofort an. Auch dies soll dem Benutzer anzeigen, den Netzstecker vor Beginn der Reinigungsarbeiten zu ziehen. Es ist auch denkbar, daß ein Öffnen des Gehäuses bzw. ein Verschwenken des Vorsatzgerätes aus der Arbeitslage heraus neben dem sofortigen Einschalten des Elektromotors des Vorsatzgerätes noch weiter ein sofortiges Hochfahren der Leistung des Saugmotors auf eine Maximalleistung bewirkt. Der Gehäuse-Öffnungssensor kann in vorteilhafter Weise so ausgebildet sein, daß der Beschleunigungssensor bzw. der Lagesensor durch ein Öffnen des Gerätes deaktivierbar ist. Dies hat zur Folge, daß ein Öffnen des Gehäuses unabhängig davon, ob ursprünglich eine Nichtbenutzung des Gerätes und/oder die normale Arbeitslage angezeigt wurde, ein sofortiges Anfahren des Elektromotors bewirkt. Hierzu kann vorgesehen sein, daß der Beschleunigungssensor zur Bildung des Gehäuse-Öffnungssensors schwenkbeweglich gelagert ist. Das abnehmbare bzw. verschwenkbare Gehäuseteil kann hierbei beispielsweise derart auf den Beschleunigungssensor wirken, daß bei geschlossenem Gehäuse der Beschleunigungssensor in einer Betriebsstellung gehalten wird. Ein Öffnen des Gehäuses bewirkt ein Verschwenken des Beschleunigungssensors, womit dieser deaktiviert und der Gehäuse-Öffnungssensor aktiviert wird. Dies kann dadurch gelöst sein, daß der Beschleunigungssensor in eine Schwenkstellung vorgespannt ist, welche Vorspannung durch Öffnung eines Gehäuseteiles auslösbar ist. Diese Vorspannung kann mittels einer Feder realisiert sein. Der Beschleunigungssensor ist in vorteilhafter Weise derart ausgebildet, daß die Abschaltung zeitverzögert erfolgt. Treten kurzfristig keine Beschleunigungen auf, führt dies nicht zur sofortigen Abschaltung des Elektromotors. Vielmehr ist eine definierte Verzögerungszeit gegeben, nach welcher erst eine Nichtbenutzung angezeigt wird. Weiterhin erweist es sich als vorteilhaft, daß die Einschaltung des Elektromotors praktisch ohne Verzögerung erfolgt. Der Beschleunigungssensor kann derart ausgebildet sein, daß dieser eine Sensor-Schale aufweist, auf welcher ein Rollkörper bewegbar ist und daß eine Lage des Rollkörpers im tiefsten Bereich der Schale ein Abschalten des Elektromotors bewirkt. Die Schale wird hierbei in vorteilhafter Weise derart in das Chassis der Elektrobürste positioniert, daß sich der Rollkörper bei horizontal stehendem Gerät, d.h. in üblicher Arbeitslage, in der Mitte der Schale, welches zugleich der tiefste Bereich der Schale ist, befindet. Wird das Gerät bewegt, so bewegt sich der Rollkörper, bedingt durch die Beschleunigungen, die bei einem normalen Saugen auftreten, aus der Mitte bzw. aus dem tiefsten Bereich heraus. Ein Sensor erkennt nun, ob sich der Rollkörper im tiefsten Bereich der Schale befindet oder diesen verlassen hat. Bewegt sich der Rollkörper aus dem tiefsten Bereich heraus, so wird der Elektromotor der Bürste ohne Verzögerungszeit eingeschaltet. Erreicht der Rollkörper bei Stillstand des Gerätes dauerhaft den tiefsten Bereich bzw. die Mitte der Schale, wird der Motor nach einer gewissen Verzögerungszeit ausgeschaltet. Dies ist die Betriebssituation, in welcher das Gerät nicht mehr über den Teppichboden geschoben wird und das Gerät sich in einer horizontalen, üblichen Arbeitslage befindet. Wird das Gerät angehoben oder in eine Überkopfstellung verschwenkt, so wird ein derartig ausgebildeter Beschleunigungssensor zugleich als Lagesensor genutzt. Auch hier bewegt sich, bedingt durch die nunmehr nicht mehr horizontale Lage des Vorsatzgerätes, der Rollkörper aus der Mitte bzw. aus dem tiefsten Bereich der Schale heraus, was ein sofortiges Einschalten des Elektromotors bewirkt. Die Sensor-Schale kann zur Bildung eines Gehäuse-Öffnungssensors schwenkbeweglich im Chassis angeordnet sein. Wird zum Öffnen des Gerätes das Gehäuseteil abgenommen bzw. abgeschwenkt, so bewirkt dies ein Verschwenken der Schale in eine nicht-horizontale Lage. Hierdurch bedingt bewegt sich der Rollkörper aus der Mitte bzw. aus dem tiefsten Bereich der Schale heraus, was auch hier zu einem sofortigen Einschalten des Elektromotors führt. Als besonders vorteilhaft erweist es sich hierbei, daß der Rollkörper eine Kugel ist. Erfindungsgemäß kann desweiteren vorgesehen sein, daß die tiefste Lage der Kugel über eine Lichtschranke erfaßbar ist. Rollt die Kugel bei Bewegung des Gerätes bzw. beim Anheben oder Umdrehen des Gerätes aus der tiefsten Lage der Schale heraus, so wird dies über die Lichtschranke erfaßt. Dieses Signal wird an eine Elektronik übergeben. Letztere bewirkt ein sofortiges Anschalten des Elektromotors des Vorsatzgerätes und ein gleichzeitiges Erhöhen der Leistung des Saugmotors auf den voreingestellten Wert. Vorteilhafterweise ist vorgesehen, daß die Schale im wesentlichen rand- und oberseitig geschlossen ist. Die Schale kann als Kegelschale ausgebildet sein, welche so ausgelegt sein muß, daß die Beschleunigungen, die beim normalen Saugen auf Teppichböden auftreten, ausreichen, um die Kugel so in Bewegung zu halten, daß der Elektromotor nicht abgeschaltet wird. Andererseits soll die Kugel beim Abstellen des Gerätes möglichst schnell und immer in gleicher Zeit in die Mitte bzw. in die tiefste Lage zurückrollen, um definierte Verzögerungszeiten beim Abschalten zu gewährleisten. Alternativ kann die Ausbildung so getroffen sein, daß der Beschleunigungssensor bzw. der Lagesensor als vertikal ausgerichtete Röhre ausgebildet ist, mit einem darin pendelbeweglich gelagerten Bewegungsteil. Auch hier wird eine "ruhende" Lage des Bewegungsteiles bei Nichtbenutzung des Gerätes erkannt. Wird das Gerät bewegt, womit Beschleunigungen auftreten, oder angehoben bzw. in eine Überkopfstellung verschwenkt, so wandert das Bewegungsteil aus dieser Grundstellung heraus, wodurch ein Signal zum Anschalten des Elektromotors gegeben wird. Auch hierbei ist der Beschleunigungssensor zugleich ein Lagesensor. Wird die vertikal augerichtete Röhre schwenkbar im Chassis des Vorsatzgerätes angeordnet, so ist auch bei dieser Ausbildung der Beschleunigungssensor als Gehäuse-Öffnungssensor nutzbar. Es wird vorgeschlagen, daß das Bewegungsteil klöppelartig aufgehängt ist. Dies kann beispielsweise dadurch gelöst sein, daß das Bewegungsteil eine, mittels einer weichen Feder in der vertikal ausgerichteten Röhre aufgehängte Kugel ist. Zur Bildung eines elektronischen Sensors ist vorgesehen, daß das Bewegungsteil und die Röhre jeweils elektrisch leitend sind. Bewegungsteil und Röhre stellen ein Kontaktpaar dar, wobei vorgeschlagen wird, daß das Bewegungsteil und die Röhre in eines Stromkreis integriert sind, der durch Berührung der Teile schließbar ist. Nur bei horizontal stehendem Gerät und Nicht-Bewegung wird kein Kontakt geschlossen und somit der Elektromotor des Gerätes abgeschaltet. Das Bewegungsteil hängt hierbei mittig in der vertikal ausgerichteten Röhre ohne diese zu berühren. Demnach ist der Stromkreis nicht geschlossen. Treten Beschleunigungen auf bzw. wird das Gerät angehoben oder in eine Überkopfstellung verschwenkt, so führen die kurzen Stromimpulse beim Kontaktieren des pendelbeweglich gelagerten Bewegungsteiles an die Röhre zum sofortigen Einschalten des Elektromotors. Bei einem Ausbleiben der Impulse schaltet sich der Elektromotor nach einer gewissen Verzögerungszeit ab. Auch ein derartig ausgebildeter Sensor kann mit einem abnehmbaren bzw. verschwenkbaren Gehäuseteil zur Bildung eines Gehäuse-Öffnungssensors gekoppelt sein. Es ist weiterhin denkbar, daß der Beschleunigungssensor durch Einschieben einer nicht leitenden Hülse zwischen dem Bewegungsteil und der Röhre deaktivierbar ist. Soll gezielt der Stromkreis unterbrochen werden, so kann hierzu über eine Mechanik eine nicht leitende Hülse in die Röhre eingeschoben werden. Unabhängig von der Lage des pendelbeweglich gelagerten Bewegungsteiles bleibt der Stromkreis geöffnet, was zur Folge hat, daß der Elektromotor des Vorsetzgerätes nicht eingeschaltet werden kann. Hierbei ist auch weiterhin denkbar, daß die Deaktivierung durch Öffnend des Gehäuseteiles auslösbar ist. Alternativ kann die Ausbildung so gewählt sein, daß bei Benutzung eines motorgetriebenen Vorsatzgerätes weiter die Überwachung durch eine Erfassung des Motorstromes des Vorsatzgerätes erfolgt. Hier bewirkt das Anzeigen einer Nichtbenutzung des Staubsaugers bspw. mittels der Überwachung einer Laufrolle des Vorsatzgerätes, oder auch eine Blockierung einer Vorsatzgerätebürste oder dgl. ein Abschalten des motorgetriebenen Vorsatzgerätes, womit der Motorstrom dieses Gerätes gegen Null geht. Dies bewirkt nunmehr eine Verminderung der Leistung des Elektromotors des Staubsaugers. In einer vorteilhaften Weiterbildung ist vorgesehen, daß bei einer Einschaltung des Staubsaugers die Stromaufnahme des Elektromotors derart einstellbar gesteuert ist, daß ein voreinstellbarer Leistungswert mit zeitlicher Verzögerung erreicht wird. Beim Einschalten des Staubsaugers erfolgt somit ein Sanftanlauf des Elektromotors, wobei der Sanftanlauf eine Kurve beschreibt, welche bei Null beginnt und konkav bis zur Erreichung des Maximalwertes der Leistungsaufnahme des Elektromotors verläuft. Das Sanftanlauf kann auch so vorgesehen sein, daß sich anstelle einer Kurve ein stufenartiger Verlauf ergibt. Ist der voreingestellte Leistungswert geringer als die Maximalleistung, so wird die Kurve auf Höhe des voreingestellten Leistungswertes abgeschnitten. Der zu pflegende Boden wird somit nicht schlagartig mit der voreingestellten Saugleistung beansprucht. Auch bleibt hierbei dem Benutzer eine Reaktionszeit den voreingestellten Leistungswert bei Bedarf zu verringern, bevor der Sanftanlauf beendet ist. Bei Einschaltung des Staubsaugers bewirkt der Sanftanlauf auch eine Schonung des Elektromotors und dessen Aufhängung. Vorteilhafterweise ist vorgesehen, daß die Einstellung der zeitlichen Verzögerung nur geräteintern durchführbar ist. Diese Einstellung erfolgt vorzugsweise werksseitig, wobei hier bevorzugt eine zeitliche Verzögerung von zwei bis vier Sekunden vorgewählt wird. Es ist weiter vorgesehen, daß der Leistungswert über ein dem Benutzer zugängliches Potentiometer einstellbar ist. Bevorzugt ist hierbei eine Ausbildung, bei der ein Potentiometer im Bereich des Handgriffes positioniert ist und wobei über dieses Potentiometer der Staubsauger sowohl eingeschaltet als auch dessen Leistung geregelt werden kann. Wird bspw. über dieses Potentiometer eine mittlere Leistung eingestellt und nach Unterbrechung der Stromzuführung diese wiederum hergestellt wird, so erfolgt mittels der zeitlichen Verzögerung der Stromaufnahme ein Sanftanlauf des Elektromotors bis zu dem voreingestellten Leistungswert.

In einer vorteilhaften Weiterbildung ist vorgesehen, daß an dem Staubsauger mehrere, in gleicher Weise zur Leistungseinstellung des einen, die Saugleistung erbringenden Elektromotors dienende Einstellpotentiometer ausgebildet sind, bspw. an einem Staubsaugerstiel und Gerätegehäuse, von welchen aber nur eines jeweils aktiv ist. Hierdurch ist es möglich, die Leistung des Elektromotors sowohl beim üblichen Betrieb, d.h. beim Saugen eines Teppichbodens oder dgl., über ein im Handgriff des Gerätestieles integriertes Potentiometer als auch bei Überbodenarbeiten, bspw. beim Absaugen von Polstern oder dgl., mittels des an dem Gerätegehäuse angeordneten Potentiometers zu regeln. Hierbei ist vorgesehen, daß jeweils nur ein Potentiometer aktiv ist. Als besonders vorteilhaft erweist sich hierbei, daß an dem Gerätegehäuse zwei. Einstellpotentiometer ausgebildet sind Um eine optimale Handhabung zu gewährleisten, ist vorgesehen, daß die Einstellpotentiometer jeweils in Kombination mit einem Handgriff angeordnet sind. Dies gilt insbesondere für die Einstellpotentiometer am Gerätegehäuse, welche bei Überbodenarbeiten benutzt werden. Auch bei der Ausbildung, bei der insgesamt drei Einstellpotentiometer, eines am Staubsaugerstiel und zwei am Gerätegehäuse, vorgesehen sind, ist nur eines jeweile aktiv. Die Anordnung der Einstellpotentiometer an einem Gerätegehäuse, welches eine Breit- und eine Schmalseite aufweist, kann bspw. so gewählt sein, daß an dem Gerätegehäuse eine Handgriff-Einstellpotentiometer-Kombination an einer Gehäusebreitseite ausgebildet ist. Dies ist insbesondere dann von Vorteil, wenn der Staubsauger bei Überbodenarbeiten mit einem Vorsatzgerät, bspw. einer elektrisch betriebenen Vorsatzbürste, eingesetzt wird. Weiter ist von Vorteil, daß an dem Gerätegehäuse eine Handgriff-Einstellpotentiometer-Kombination an einer Gehäuseschmalseite ausgebildet ist. Dies kann bspw. bei Einsatz des Staubsaugers mit vorgeschaltetem Saugschlauch oder dgl. von Vorteil sein. Hier wird der Staubsauger an dem auf derGehäuseschmalseite angeordneten Handgriff getragen und die Leistung des Elektromotors mit dem an dem Handgriff angeordneten Einstellpotentiometers den jeweiligen Bedürfnissen entsprechend eingestellt. Als gebrauchstechnisch besonders vorteilhaft erweist es sich, daß die Umschaltung zwischen einem aktiven und einem inaktiven Einstellpotentiometer durch Betätigung des inaktiven Einstellpotentiometers erfolgt. Dies kann bspw. dadurch gelöst sein, daß eine interne Steuerung das zuletzt betätigte Einstellpotentiometer registriert, dieses als aktiv erkennt und das andere Einstellpotentiometer auf inaktiv setzt. Dies gilt auch bei einem Einsatz von drei oder mehr Einstellpotentiometern, wobei hier eines aktiv und die anderen inaktiv gesetzt werden. Wird bspw. vom Normalbetrieb des Staubsaugers in einen Überbodenbetrieb gewechselt, so ergreift der Benutzer den am Gerätegehäuse angeordneten Handgriff. Ist beim Normalbetrieb an dem gerätestielseitigen Einstellpotentiometer ein Leistungswert des Elektromotors voreingestellt, so bleibt dieses Einstellpotentiometer solange aktiv, bis der Benutzer das Einstellpotentiometer am gehäuseseitigen Handgriff betätigt. Hiernach erfolgt ein Umschalten auf das gerätegehäuseseitige Einstellpotentiometer. Mittels letzterem kann nunmehr die Leistung des Elektromotors verringert oder auch vergrößert werden. Wird dieses Einstellpotentiometer in eine Aus-Stellung gebracht, so wird der die Saugleistung erbringende Elektromotor auch dann ausgeschaltet, wenn eines oder mehrere der anderen Einstellpotentiometer in einer Ein-Stellung stehen. Dies ist dadurch ermöglicht, daß letztere inaktiv sind. Alternativ kann auch vorgesehen sein, daß die Umschaltung zwischen einem aktiven und einem inaktiven Einstellpotentiometer durch einen zu betätigenden Umschalter erfolgt. Dies ist bspw. dann von Vorteil, wenn zwei Einstellpotentiometer vorgesehen sind. Vorteilhafterweise kann die Ausbildung so getroffen sein, daß eine Umschaltung durch Abnahme des Gerätestieles bewirkbar ist. Hier kann bspw. im Übergangsbereich zwischen Gerätestiel und Gerätegehäuse ein Schalter vorgesehen sein, welcher bei eingestecktem Gerätestiel das Einstellpotentiometer im Handgriff des Gerätestieles aktiviert. Nach Abziehen des Gerätestieles bewirkt dieser Schalter ein Umschalten auf das am Gerätegehäuse angeordnete Einstellpotentiometer, womit dieses aktiviert wird. Hierbei ist es besonders vorteilhaft, daß bei Betätigung des Umschalters eine Motorabstellung erfolgt. Insbesondere beim Abziehen des Gerätesstieles vom Gerätegehäuse und der damit einhergehenden Betätigung des Umschalters erfolgt eine Abstellung des die Saugleistung erbringenden Motors. Erfolgt bspw. die Stromzuführung des Elektromotors durch ein in die Handhabe des Gerätestieles einlaufendes Kabel, so kann hier eine Stecker-Kupplung-Kombination am Handgriff vorgesehen sein. Ein Abziehen des Gerätestieles aus dem Gerätegehäuse bewirkt hierbei auch eine Unterbrechung der Stromzuführung, womit zur weiteren Handhabung des Staubsaugers ein Umstecken des stromführenden Kabels vom Handgriff des Gerätestieles auf das Gerätegehäuse erfolgen muß. Der Gebläsemotor setzt erst nach Einkuppeln der Stromzuführung und einem hiernach erfolgenden Betä-: tigen des gehäuseseitigen Einstellpotentiometers ein. Dies gilt auch dann, wenn bspw. das stromzuführende Kabel in die Kupplung des Gehäuses eingesteckt wird, wobei das Einstellpotentiometer am Gehäuse auf einen Maximalwert eingestellt ist. Der Elektromotor bleibt so lange abgeschaltet, bis das Einstellpotentiometer bewegt wird, womit einem unkontrollierten Anlaufen des Elektromotors entgegengewirkt ist. Bei Benutzung eines motorgetriebenen Vorsatzgerätes kann die Betätigung des Umschalters sowohl das Abstellen des Gebläsemotors als auch das Abstellen des Vorsatzgerätemotors bewirken.

Nachstehend ist die Erfindung des weiteren anhand der beigefügten Zeichnung, die jedoch lediglich Ausführungsbeispiele darstellen, erläutert. Hierbei zeigt:
- Fig. 1: einen erfindungsgemäßen Staubsauger in Vorderansicht;
- Fig. 2: den Staubsauger gemäß Fig. 1 in Seitenansicht;
- Fig. 3: die Seitenansicht gemäß Fig. 2, jedoch bei abgenommenem Gerätestiel und umgesteckter Stromversorgung;
- Fig. 4: eine Schaltungsanordnung zum zeitlich verzögerten Anlaufen eines Elektromotors des Staubsaugers, zum Voreinstellen des Leistungswerte über Einstellpotentiometer und zur Verminderung der Leistung des Elektromotors bei angezeigter Nichtbenutzung des Gerätes, eine erste Ausführungsform betreffend;
- Fig. 5: ein Blockschaltbild, eine Schaltung gemäß Fig. 4 betreffend, jedoch in einer zweiten Ausführungsform;
- Fig. 6: eine perspektivische Darstellung eines Gerätevorsatzes mit einem integrierten Beschleunigungssensor;
- Fig. 7: den vorderen Endbereich des Gerätevorsatzes gemäß Fig. 6 in einer Seitenansicht;
- Fig. 8: eine der Fig. 7 entsprechende Darstellung, jedoch nach Öffnen eines Gehäuseteiles;
- Fig. 9: den Beschleunigungssensor in einer Einzeldarstellung, und zwar in Draufsicht;
- Fig. 10: einen Schnitt durch den Beschleunigungssensor in eingebautem Zustand, bei geschlossenem Gehäuseteil gemäß Fig. 7;
- Fig. 11: eine der Fig. 10 entsprechende Darstellung, jedoch nach Öffnen des Gehäuseteiles gemäß Fig. 8;
- Fig. 12: eine der Fig. 9 entsprechende Darstellung, jedoch eine weitere Ausführungsform des Beschleunigungssensors betreffend;
- Fig. 13: eine der Fig. 10 entsprechende Darstellung, den Beschleunigungssensor gemäß Fig. 12 betreffend; und
- Fig. 14: eine der Fig. 11 entsprechende Darstellung, ebenfalls den Beschleunigungssensor gemäß 12 betreffend.

Der dargestellte Staubsauger 1 ist als Handgerät konzipiert. Er besitzt ein Gerätegehäuse 2, an das sich oben hin ein Gerätestiel 3 anschließt mit einem endseitigen Handgriff 4. In dem Handgriff 4 ist ein daumenbetätigbarer Einstellpotentiometer 5 angeordnet. Der Elektrokabelanschluß ist an dem dem Einstellpotentiometer 5 entgegengesetzten, dem Benutzer zugewandten Ende des Handgriffes 4 steckbar angeordnet. Hierzu besitzt das Elektrokabel 6 einen Stecker 7, welcher in eine, nicht näher dargestellte handgriffendseitige Kupplung eingesetzt ist.

Das Gerätegehäuse 2 ist unterteilt in ein Motorgehäuse 8 und eine sich darüber erstreckende Kammer 9 zur Aufnahme eines Filterbeutels. Das Motorgebläse ist zeichnerisch im einzelnen nicht wiedergegeben.

Das Motorgehäuse 8 geht unterseitig in eine Rohrkupplung (10) über, welche den Luftströmungsanschluß zu einer Saugdüse 11 herstellt.

Bezüglich der Saugdüse 11 handelt es sich um eine sogenannte Saug/Bürsten-Düse, die im Düsenmund eine Bürstenwalze 12 enthält, die über einen separaten Antrieb in Rotation gesetzt wird.

Der Gerätestiel 3 ist teleskopierbar ausgebildet, wobei dieser eine feststehende Grundstange 13 aufweist, in welcher ein Teleskopstück 14 nach Betätigung einer Verriegelungstaste 15 verschiebbar ist. Die Grundstange 13 besitzt an dem dem Gerätegehäuse 2 zugeordneten Ende eine Verankerung, welche in dem Gerätegehäuse 2 einrastbar ist. Auch diese Verrastung kann mittels einer Taste 16 gelöst werden, womit der gesamte Gerätestiel 3 von dem Staubsauger 1 abgenommen werden kann.

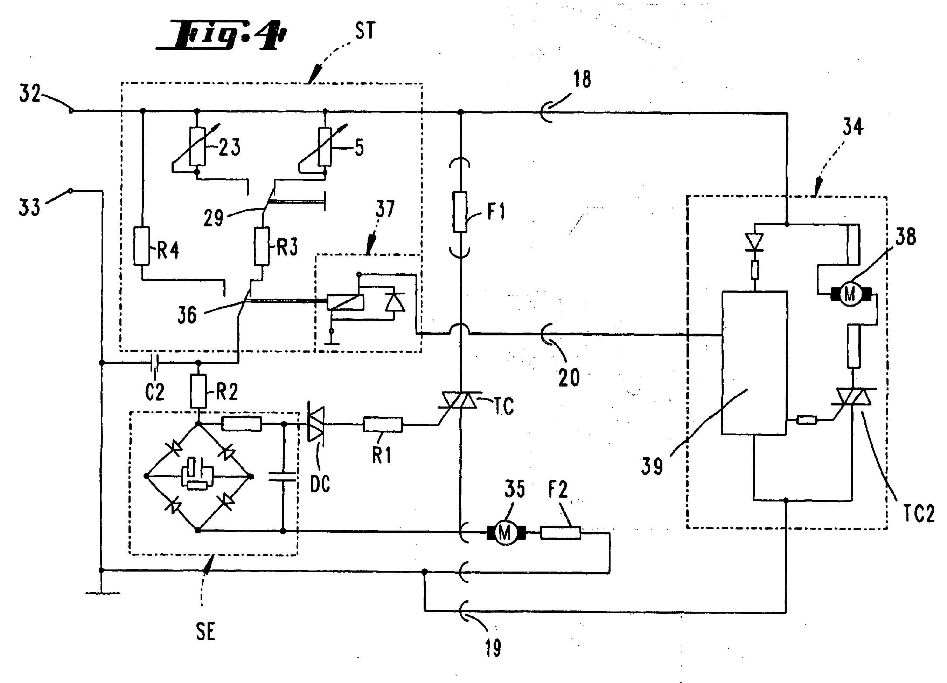

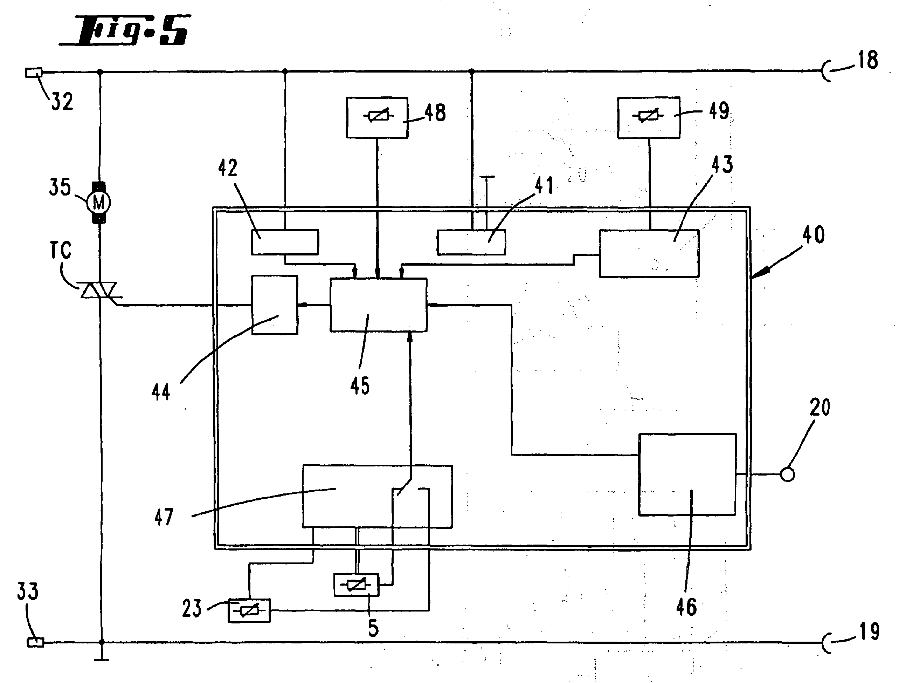

Die bereits erwähnte Rohrkupplung 10 bildet nicht nur den Luftströmungsanschluß zu der Saugdüse 11, sondern auch den elektrischen Anschluß zu letzterer. Hierzu ist im Bereich des Überganges zwischen der Rohrkupplung 9 und dem zugeordneten Saugstutzen 17 der Saugdüse 11 eine Stecker-Kupplungsanordnung vorgesehen. Diese Stekker-Kupplungsanordnung weist neben den üblichen Stromversorgungsanschlüssen 18, 19 einen weiteren Signalanschluß 20 auf (vgl. Fig. 4 und 5).

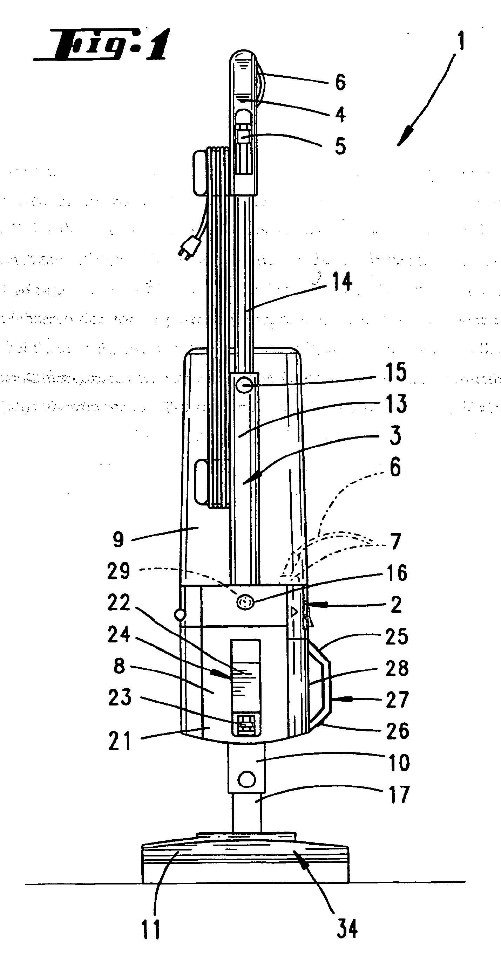

Wie in Fig. 1 zu erkennen, ist an der Gehäusebreitseite 21 des Gerätegehäuses 2 eine aus einem Handgriff 22 und einem Einstellpotentiometer 23 sich zusammensetzende Handgriff-Einstellpotentiometer-Kombination 24 vorgesehen. Eine weitere, sich aus einem Handgriff 25 und einem Einstellpotentiometer 26 zusammensetzende Handgriff-Einstellpotentiometer-Kombination 27 ist des weiteren an der Gehäuseschmalseite 28 angeordnet.

Im Bereich der Verankerung des Gerätestiels 3 in dem Gerätegehäuse 2 ist ein Umschalter 29 angeordnet, welcher durch Einstecken bzw. Herausziehen des Gerätestieles 3 aus dem Gerätegehäuse 2 betätigbar ist.

Die Saugdüse 11 ist mit Laufrollen 30 versehen, deren Drehbewegung mittels eines Sensors 31 erfaßt werden.

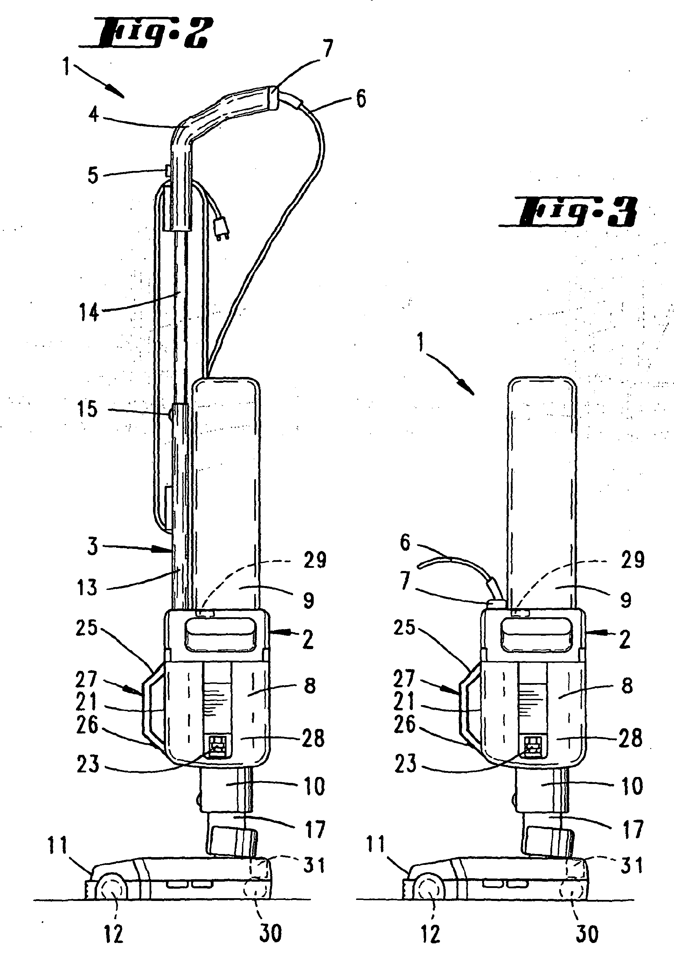

Um die Stromversorgung des die Saugleistung erbringenden Elektromotors innerhalb des Gerätegehäuses 2 auch bei abgezogenem Gerätestiel 3 zu gewährleisten, wird das Elektrokabel 6 mit dem Stecker 7 vom Handgriff 4 des Gerätestiels 3 abgezogen und in eine entsprechenden Kupplung auf der Gerätegehäuseoberseite eingesteckt (vgl. Fig. 3).

Anhand der Fig. 4 ist die Anordnung einer elektronischen Schaltung zur Steuerung einer zeitlichen Verzögerung der Stromaufnahme des Gebläsemotors bei Einschalten des Staubsaugers 1, zur Erreichung eines voreinstellbaren Leistungswertes und zur Anzeige einer Nichtbenutzung bei Stillstand des Gerätes gezeigt.

Die Schaltung wird über Stromanschlußpunkte 32, 33 versorgt, welche Stromanschlußpunkte 32, 33 in direkter Verbindung stehen mit den bereits erwähnten Stromversorgungsanschlüssen 18, 19 des als Saugdüse 11 ausgebildeten Gerätevorsatzes 34. Der Stromanschlußpunkt 33 bildet hierbei den Null-Leiter, welcher auch direkt über eine Erregerfeldspule F2 mit dem Gebläsemotor 35 verbunden ist. Die Stromversorgung des Gebläsemotors 35 erfolgt über ein Triac TC. Diesem Triac TC ist eine weitere Erregerfeldspule F1 des Motors vorgeschaltet. Die Steuerung des Triacs TC erfolgt über einen Diac DC, wobei zwischen dem Triac TC und dem Diac DC ein ohmscher Widerstand R1 zwischengeschaltet ist. Dem Diac DC wird die Steuerspannung über eine Sanftanlaufelektronik SE zugeführt, welche in Reihe liegt zu einer Stromversorgungselektronik ST, welche wiederum in Verbindung steht mit: dem den P-Leiter bildenden Stromanschlußpunkt 32. Zwischen der Stromversorgungselektronik ST und der Sanftanlaufelektronik SE ist ein ohmscher Widerstand R2 in Reihe geschaltet. Des weiteren ist ein mit dem Null-Leiter verbundener Kondensator C2 vorgesehen, welcher zwischen den ohmschen Widerstand R2 und der Stromversorgungselektronik ST greift.

Die Stromversorgungselektronik ST setzt sich im einzelnen aus zwei unabhängig voneinander regelbaren Einstellpotentiometern 5, 23, einem zwischen den beiden Einstellpotentiometern 5, 23 umschaltbaren Schalter 29, einem hierzu in Reihe liegenden ohmschen Widerstand R3 und einem zu der Einstellpotentiometer-Widerstands-Kombination parallelliegenden ohmschen Widerstand R4 zusammen. Mittels eines Schalters 36 besteht die Möglichkeit eines Umschaltens zwischen dem Widerstand R4 und der Einstellpotentiometer-Widerstand-Kombination.

In der in Fig. 4 dargestellten Stellung von Umschalter 29 und Schalter 36 erfolgt die Stromzuführung zur Sanftanlaufelektronik SE über den Einstellpotentiometer 5 und Widerstand R3. Durch die ohmsche Widerstandsveränderung mittels des Einstellpotentiometers 5 erfolgt eine Phasenanschnittsveränderung zur Drehzahlveränderung des Gebläsemotors 35.

Wird nunmehr der Gerätestiel 3 aus dem Gerätegehäuse 2 gezogen, so fällt der Umschalter 29 in seine andere Position, in welcher nunmehr das Einstellpotentiometer 23 aktiv ist.

Ein Umschalten des Schalters 36 auf den ohmschen Widerstand R4 bewirkt eine Verminderung der Leistung des Gebläsemotors 35. Der ohmsche Widerstand R4 ist so ausgelegt, daß der Gebläsemotor 35 mit einer Minimalleistung läuft. Durch dieses Umschalten des Schalters 36 wird die Einstellpotentiometer-Widerstand-Kombination mittels des ohmschen Widerstandes R4 überbrückt. Bei einem Zurückschalten auf den ohmschen Widerstand R3 erfolgt wiederum nur eine Erhöhung der Leistung des Gebläsemotors bis zur Voreinstellung des jeweiligen Einstellpotentiometers 5 oder 23.

Die Sanftanlaufelektronik SE bewirkt bei Einschaltung des Staubsaugers 1, daß die Stromaufnahme des Gebläsemotors 35 derart gesteuert ist, daß der mittels des Einstellpotentiometers 5, 23 voreingestellte Leistungswert erst mit einer zeitlichen Verzögerung erreicht wird. Die Stromzuführung des Diacs DC wird entsprechend mittels der Sanftanlaufelektronik SE geregelt.

Zur Steuerung des Schalters 36, welcher zur Umschaltung von dem jeweils aktiven Einstellpotentiometer 5 oder 23 auf den ohmschen Widerstand R4 dient, ist eine Relaisschaltung 37 vorgesehen, welche über den Signalanschluß 20 vom Vorsatzgerät 34 angesteuert wird.

Über die Stromversorgungsanschlüsse 18, 19 wird in dem Gerätevorsatz 34 ein Elektromotor 38 versorgt, welcher eine Bürstenwalze 12 (vgl. Fig. 2) antreibt. Dieser Elektromotor 38 steht mit einem integrierten Schaltkreis 39 in Verbindung, in welchen auch die Impulse des Radsensors 31 einlaufen. Bei Stillstand des Elektromotors 38, bspw. bei Blockierung der Bürstenwalze 12, oder auch wenn der Radsensor 31 den Stillstand der Laufrollen 30 meldet, gibt der integrierte Schaltkreis 39 über den Signalanschluß 20 ein Signal auf die RelaisSchaltung 37, womit der Schalter 36 auf den ohmschen Widerstand R4 umschaltet. Dies hat zur Folge, daß bei Stillstand des Gerätevorsatzmotors 38 und/oder auch bei Anzeigen der Nichtbenutzung des Staubsaugers 1 durch Stillstand der Laufrollen 30 die Leistung des Elektromotors 35 auf einen Minimalwert vermindert wird.

Meldet der Sensor 31 den Stillstand der Laufrollen 30, so bewirkt der integrierte Schaltkreis 39 auch ein Abschalten des Elektromotors 38 des Gerätevorsatzes 34, indem die Steuerspannung des dem Elektromotors 38 zugeordneten Triacs TC2 unterbrochen wird.

Es ist auch denkbar, die Schaltung so auszubilden, daß bei Abziehen des Gerätestieles 3 und dem damit einhergehenden Umschalten des Schalters 29 auf den Einstellpotentiometer 23 zunächst ein Abschalten des Gebläsemotors 35 und auch des Elektromotors 38 des Gerätevorsatzes 34 erfolgt. Erst nach erneuter Betätigung des nun aktiven Einstellpotentiometers 23 laufen die Elektromotoren wieder an.

Als besonders vorteilhaft erweist es sich bei dieser Ausführung, daß zur Leistungssteuerung lediglich eine weitere Steuerleitung zusätzlich zu den üblichen Netzleitungen vorgesehen wird. Diese Steuerleitung bildet gemäß Fig. 4 die Verbindung zwischen dem Einstellpotentiometer 5 und dem gerätegehäuseseitigen Umschalter 29. Hierdurch kann im Bereich der Kupplungsanordnung zwischen dem Gerätestiel 3 und dem Gerätegehäuse 2 eine kompakte Bauweise von Kupplung und Stecker realisiert werden.

Eine weitere Ausführungsform der elektronischen Schaltung ist in Fig. 5 dargestellt. Auch hier erfolgt die Stromversorgung des Gebläsemotors 35 über ein Triac TC. Die Stromanschlußpunkte 32 und 33 stehen wie in dem zuvor beschriebenen Beispiel in direkter Verbindung zu Stromversorgungsanschlüssen 18 und 19 eines Gerätevorsatzes.

Im Gegensatz zum zuvor beschriebenen Ausführungsbeispiel ist hier ein integrierter Schaltkreis 40 vorgesehen. Mit der Bezugsziffer 41 ist die Spannungsversorgung des integrierten Schaltkreises 40 bezeichnet.

Der integrierte Schaltkreis 40 beinhaltet mehrere Module. Dies sind ein Netzspannungs-Synchronisations-Modul 42, ein Sanftanlauf-Modul 43, ein Zündimpuls-Modul 44, einen Phasenanschnitt-Controller 45, ein Komparator 46 und ein Logik-Modul 47. Extern sind des weiteren eine Vorrichtung 48 zur Voreinstellung der Minimalleistung des Gebläsemotors 35, eine weitere Vorrichtung 49 zur Voreinstellung der Anlaufzeit des Sanftanlaufes und zwei Einstellpotentiometer 5 und 23 vorgesehen.

Das Logik-Modul 47 dient zur Registrierung des zuletzt getätigten Einstellpotentiometers 5 oder 23. Die Umschaltung zwischen einem aktiven, bspw. Einstellpotentiometer 5 und einem inaktiven Einstellpotentiometer, bspw. 23 erfolgt durch Betätigung des inaktiven Einstellpotentiometers, bspw. 23. Das Logik-Modul 47 registriert diese Betätigung und schaltet intern auf den aktiven Einstellpotentiometer um. Sinnbildlich ist dies in Fig. 5 durch einen Schalter gekennzeichnet.

Über das Logik-Modul 47 wird der Phasenanschnitt-Controller 45 entsprechend dem eingestellten Wert des Einstellpotentiometers 5 oder 23 gesteuert. In diesem Phasenanschnitt-Controller 45 laufen des weiteren die Informationen des Sanftanlauf-Moduls 43, der Minimalleistungs-Vorrichtung 48 und des Komparators 46 ein. In dem Controller 45 werden die Daten entsprechend verarbeitet, um entsprechende Zündimpulse über das Zündimpuls-Modul 44 auf das Triac TC zur Ansteuerung desselben auszusenden.

Beim Einschalten des Staubsaugers 1 beeinflußt das Sanftanlauf-Modul 43 den Phasenanschnitt-Controller 45 derart, daß der über den Einstellpotentiometer 5 voreingestellte Leistungswert erst mit zeitlicher Verzögerung erreicht wird. Die Einstellpotentiometer 5, 23 und auch jedes weitere einsetzbare Einstellpotentiometer sind in einer Hierarchie geordnet, wobei beim Einschalten des Staubsaugers 1 stets das Einstellpotentiometer 5 aktiv ist, welches am Handgriff 4 des Gerätestieles 3 angeordnet ist.

Über den Signalanschluß 20 kann vom Gerätevorsatz 34 ausgehend, wie bereits im ersten Ausführungsbeispiel beschrieben, ein Signal auf den Komparator 46 wirken. Letzterer ist so ausgelegt, daß bei inaktivem Eingangssignal der Phasenanschnitt-Controller 45 entsprechend dem voreingestellten Leistungswert des Einstellpotentiometers 5 oder 23 reagiert. Ist jedoch das Eingangssignal auf dem Signalanschluß 20 aktiv, so schaltet der Phasenanschnitt-Controller 45 um auf den voreingestellten Wert der Minimalleistungsvorrichtung 48, womit eine Verminderung der Leistung des Gebläsemotors 35 auf die Minimalleistung erfolgt. Dies geschieht bspw. bei Stillstand des Gerätes, insbesondere des Gerätevorsatzes 34, wobei hier der Stillstand der Laufrollen 30 mittels des Sensors 31 angezeigt wird. Hier kann auch vorgesehen sein, daß in dem Gerätevorsatz 34 ein Schmutzsensor vorgesehen ist, welcher mit dem dort vorgesehenen integrierten Schaltkreis 39 in Verbindung steht. Bei angezeigter Nichtbenutzung, d.h. bei Stillstand des Gerätes gibt der Sensor 31 ein entsprechendes Signal auf den integrierten Schaltkreis 39. Gleichzeitig mißt ein Schmutzsensor den Verschmutzungsgrad des betreffenden Bodenbereiches. Ist der Verschmutzungsgrad gering bis normal, so erfolgt über den Phasenanschnitt-Controller 45 im integrierten Schaltkreis 40 eine Verminderung der Leistung des Gebläsemotors 35 auf die Minimalleistung. Zeigt der Schmutzsensor jedoch eine erhöhte Verschmutzung des Bodens an, so führt dies über den Phasenanschnitt-Controller 45 zu einer Erhöhung der Leistung des Gebläsemotors 35 auf die Maximalleistung.

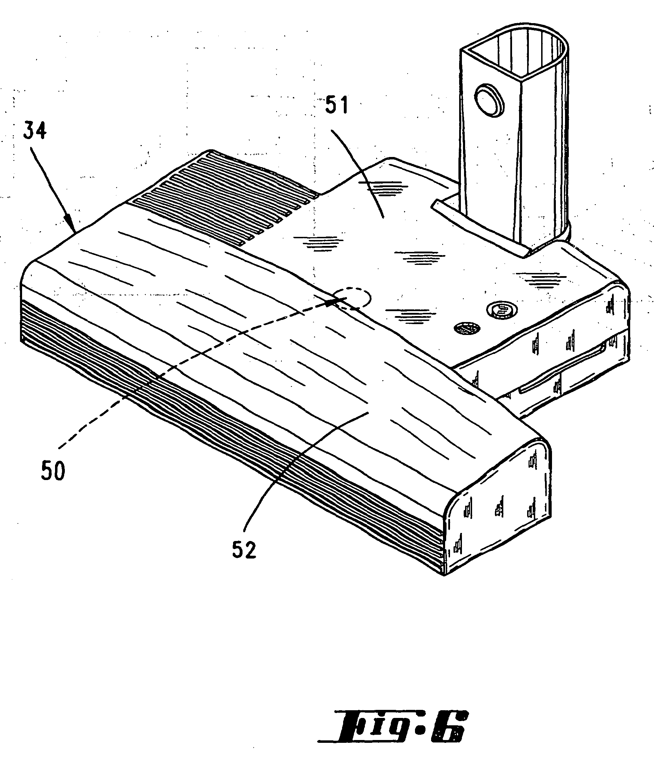

Das Eingangssignal kann von einem in dem Gerätevorsatz 34 angeordneten Beschleunigungssensor 50 geliefert werden. Letzterer ist in einem Bereich des Gerätevorsatzes 34 angeordnet, in welchem eine feste Gehäusedecke 51 in ein verschwenkbares Gehäuseteil 52 übergeht (vgl. Fig. 6).

Die Anordnung ist hierbei so getroffen, daß der Beschleunigungssensor 50 über eine Achse 53 schwenkbeweglich an der Unterseite der festen Gehäusedecke 51 gelagert ist, wobei der Beschleunigungssensor 50 über den Rand der Gehäusedecke 51 und somit in den Bereich des verschwenkbaren Gehäuseteils 52 ragt. Hier wird der Beschleunigungssensor 50 von einem an der Unterseite des verschwenkbaren Gehäuseteils 52 angeordneten Zapfen 54 beaufschlagt. Letzterer hält den Beschleunigungssensor 50 in einer horizontalen Lage bzw. in einer geräteboden-parallelen Lage.

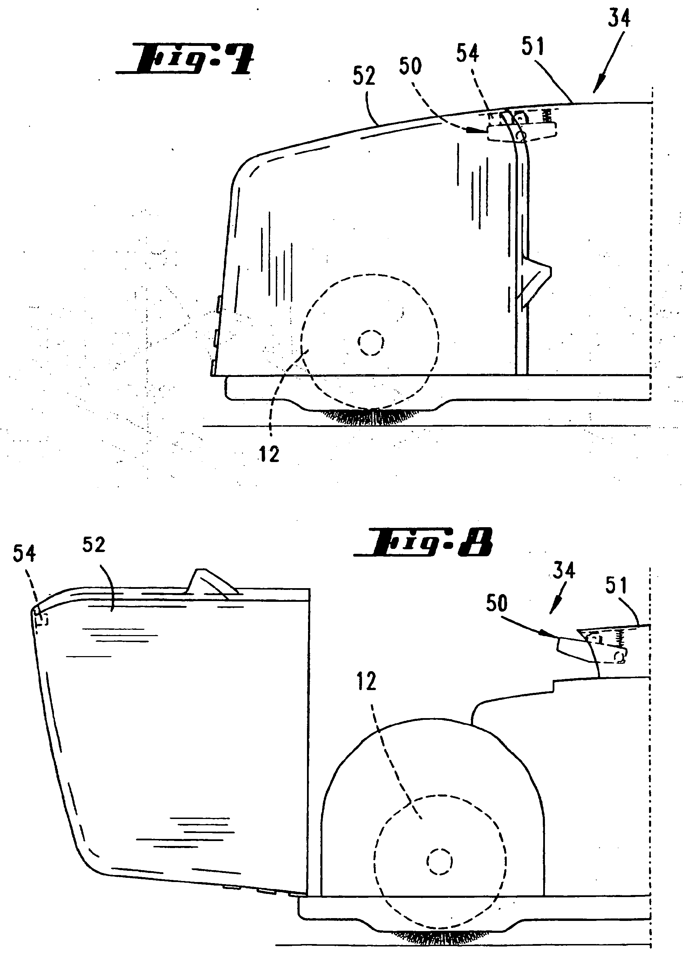

In den Fig. 7 bis 11 ist eine erste Ausführungsform des Beschleunigungssensors 50 gezeigt. Es ist zu erkennen, daß der Beschleunigungssensor 50 eine Sensor-Schale 55 aufweist, welche als Kegelschale ausgebildet ist. Letztere setzt sich im wesentlichen aus zwei Hälften 56 und 57 zusammen, wobei die Schalenhälfte 56 ein Schalenunterteil und die Schalenhälfte 57 ein Schalenoberteil bildet. Durch die kegelschalige Ausbildung weist die untere Schalenhälfte 56 in ihrem Zentrum einen tiefsten Bereich B auf. Oberseitig besitzt die Sensor-Schale 55 eine domartige Kuppe 58. Letztere ist an der Oberseite der oberen Schalenhälfte 57 befestigt, beispielsweise geklebt. Die Kuppe 58 weist Bohrungen zum Durchtritt der Achse 53 auf. Die Sensor-Schale 55 ist somit im Bereich ihrer Kuppe 58 um die Achse 53 schwenkbeweglich im Gehäuse nahe der festen Gehäusedecke 51 des Gerätevorsatzes 34 gelagert.

Weiterhin ist in der Kuppe 58 ein Sensor in Form einer Lichtschranke 59 angeordnet. Koaxial zu dieser Lichtschranke 59 besitzt die obere Schalenhälfte 57 einen dem Durchmesser der Lichtschranke 59 entsprechenden Durchbruch 60. Die Lichtschranke 59 wirkt somit in den Innenraum 61 der Sensor-Schale 55.

In diesem Innenraum 61 ist ein Rollkörper 62 in Form einer Kugel 63 freibeweglich angeordnet.

Der Beschleunigungssensor 50 bzw. die Sensor-Schale 55 ist mittels einer Druckfeder 64 um die Achse 53 in Reichtung auf den Zapfen 54 des verschwenkbaren Gehäuseteils 52 vorgespannt.

Die Signale des Beschleunigungssensors 50 bzw. der in der Sensor-Schale 55 angeordneten Lichtschranke 59 werden über eine Leitung 65 an die Elektronik übermittelt.

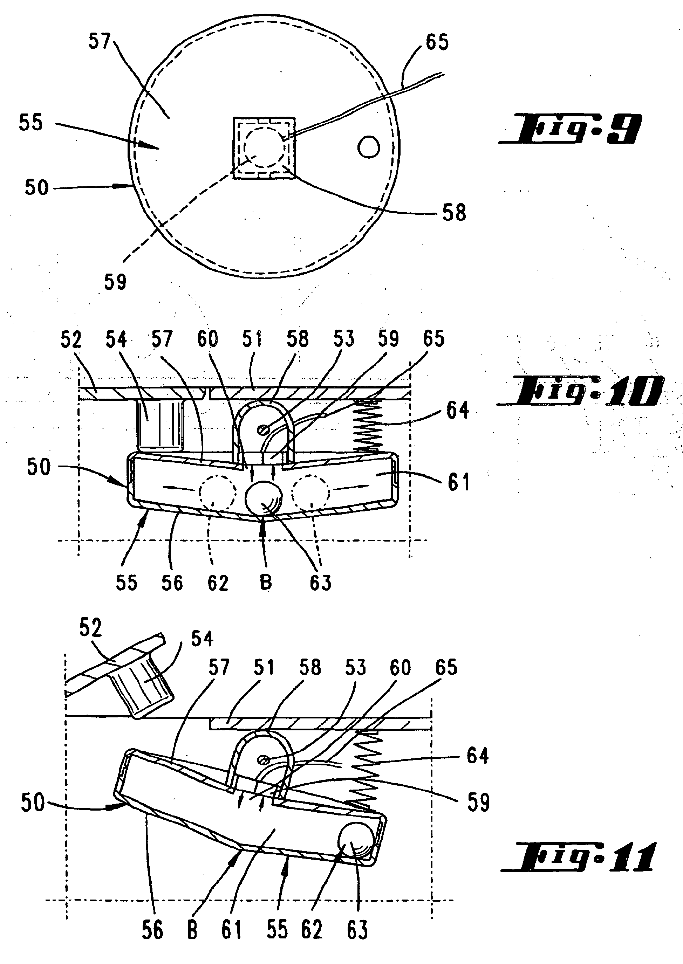

In Fig. 10 ist eine Situation gezeigt, in welcher sich der Gerätevorsatz 34 in einer horizontalen Position befindet. Diese Position ist die zum Saugen übliche Betriebslage. Es ist zu erkennen, daß sich der Beschleunigungssensor 50 bzw. die Sensor-Schale 55 sich ebenfalls in einer horizontalen Lage befindet. Bei Stillstand des Gerätes bzw. bei Nichtbenutzung, liegt die Kugel 63 aufgrund der kegelschalenartigen Ausbildung des Beschleunigungssensors 50 im tiefsten Bereich B. Diese Positionierung der Kugel 63 wird über die Lichtschranke 59 erkannt. Die elektronische Steuerungseinrichtung erhält somit ein aktives Eingangssignal, wonach ein Abschalten des Elektromotors 38 des Gerätesvorsatzes 34 und eine Verminderung der Leistung des Gebläsemotors 35 auf eine voreingestellte Minimalleistung erfolgt. Wird das Gerät bewegt, so rollt die Kugel 63 aufgrund der bei einem normalen Saugen von Teppichböden auftretenden Beschleunigungen aus dem tiefsten Bereich B heraus, wobei die Kugel 63 auch den Erfassungsbereich der Lichtschranke 59 verläßt. Der Elektromotor 38 wird ohne Verzögerungszeit eingeschaltet und die Leistung des Gebläsemotors 35 erhöht. Die Sensor-Schale 55 ist so ausgelegt, daß die Beschleunigungen ausreichen, um die Kugel 63 derart in Bewegung zu halten, daß der Elektromotor 38 nicht abgeschaltet wird. Andererseits rollt die Kugel 63 beim Abstellen des Gerätes, d.h. bei einer Nichtbenutzung möglichst schnell in die Mitte, d.h. in den tiefsten Bereich B zurück. Hierdurch ist eine definierte Verzögerungszeit beim Abschalten gewährleistet.

Ein Herauswandern der Kugel 63 aus dem tiefsten Bereich B und dementsprechend aus dem Wirkungsbereich der Lichtschranke 59 wird auch bei einem Anheben des Gerätes bzw. bei einem Verschwenken in eine Überkopfstellung erzielt. Hierbei verläßt die Sensor-Schale 55 die horizontale Lage, womit die Kugel 63 aus dem tiefsten Bereich B rollt. Demnach schaltet der Elektromotor 38 des Gerätevorsatzes 34 bei einem Anheben bzw. einem Umdrehen des Gerätevorsatzes 34 sofort an. Dies ist gewünscht. Dem Benutzer soll durch das Hochfahren des Elektromotors 38 ein Signal gegeben werden, vor Reinigungsarbeiten am Gerätevorsatz 34 den Netzstecker des Gerätes zu ziehen. Es besteht somit keine Gefahr, daß bei einem Umdrehen des Gerätevorsatzes 34, beispielsweise zu Reinigungszwecken oder zum Bürstenwechsel, sich der Elektromotor 38 während dieser Arbeiten plötzlich einschaltet.

Dieser Effekt ist weiterhin auch dann gewünscht, wenn das Gehäuseteil 52, beispielsweise zum Austauschen der Bürsten, abgeschwenkt wird. Hierbei verläßt der Zapfen 54 des verschwenkbaren Gehäuseteiles 52 den Bereich des Beschleunigungssensors 50 bzw. der Sensor-Schale 55, womit letztere aufgrund der Vorspannung der Feder 64 verschwenkt. Dementsprechend verläßt die Kugel 63 den tiefsten Bereich B und den Wirkungsbereich der Lichtschranke 59. Auch hier wird sofort der Elektromotor 38 eingeschaltet.

Bedingt durch die zuvor beschriebene Ausgestaltung ist der Beschleunigungssensor zugleich ein Lagesensor. Weiterhin ist durch die schwenkbewegliche Lagerung des Beschleunigungssensor 50 ein Gehäuse-Öffnungssensor ausgebildet.

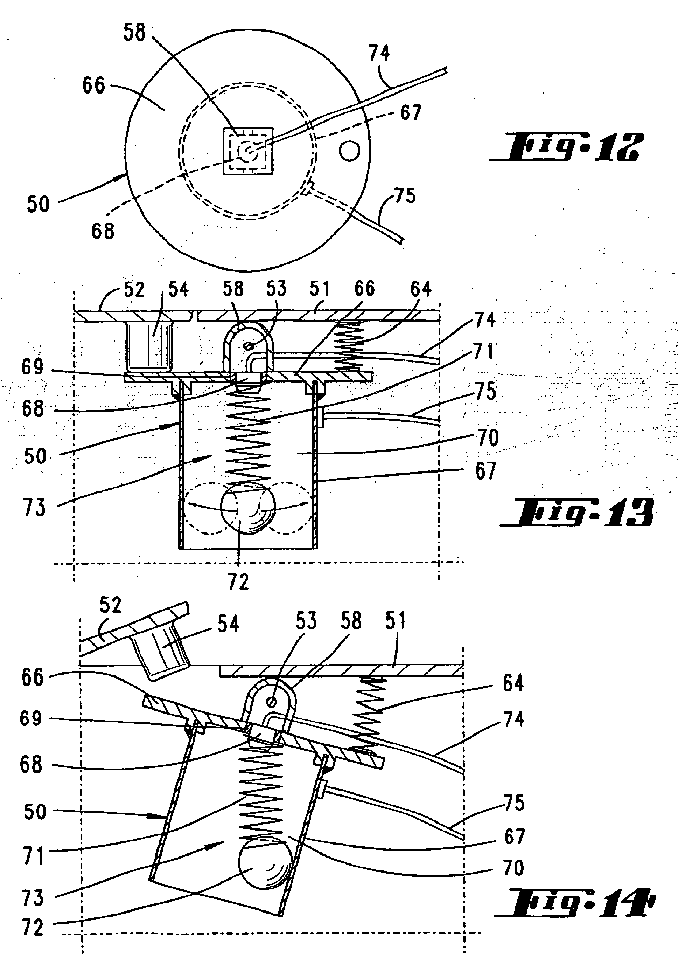

Ein weiteres Ausbildungsbeispiel eines Beschleunigungssensors 50 ist in den Fig. 12 bis 14 gezeigt.

Hier besitzt der Beschleunigungssensor 50 eine kreisrunde Trägerplatte 66, an welcher unterseitig eine zylinderartige Röhre 67 befestigt ist, beispielsweise mittels Schweißung.

Koaxial zur Trägerplatte 66 und zur Röhre 67 ist an der Oberseite der Trägerplatte 66 entsprechend dem zuvor beschriebenen Ausführungsbeispiel eine domartige Kuppe 58 vorgesehen, welche ebenfalls mit der Trägerplatte 66 beispielsweise mittels Schweißung verbunden ist. Auch hier besitzt die Kuppe 58 Durchbrechungen zum Durchtritt der gehäuseseitig befestigten Achse 53.

Mittig, abgedeckt von der Kuppe 58, ist in der Trägerplatte 66 eine stiftartige Federhalterung 68 eingelassen, wobei zwischen Trägerplatte 66 und Federhalterung 68 ein Isolierring 69 eingesetzt ist. Unterseitig der Trägerplatte 66 und somit in den Innenraum 70 der Röhre 67 hineinragend ist an der Federhalterung 68 eine weiche Schraubenfeder 71 befestigt. Endseitig ist an dieser eine Kugel 72 angeordnet, wobei die Länge des so gebildeten Bewegungsteiles 73 so bemessen ist, daß die Kugel 72 nicht aus dem Bereich des Innenraumes 70 der Röhre 67 tritt.

Das aus der weichen Feder 71 und der Kugel 72 bestehende Bewegungsteil 73 ist über die Federhalterung 68 in einem Stromkreis integriert. Hierzu besitzt die Federhalterung 68 einen Leitungsanschluß 74. Ebenso ist auch die als ein Kontaktzylinder ausgebildete Röhre 67 über einen Leitungsanschluß 75 in diesen Stromkreis integriert.

Bedingt durch die Isolierung zwischen der Federhalterung 68 und der Trägerplatte 66 ist ein Schießen des Stromkreises erst durch Berührung des Bewegungsteiles 73 an die Wandung der Röhre 67 ermöglicht.

Mittels des pendelbeweglich gelagerten Bewegungsteiles 73 werden bedingt durch die Beschleunigungen, die beim normalen Saugen von Teppichböden auftreten, kurze Stromimpulse beim Kontaktieren der Kugel 72 an die Röhre 67 erzeugt. Diese führen zu einem sofortigen Einschalten des Elektromotors 38. Bei einem Ausbleiben dieser Impulse schaltet sich der Elektromotor 38 nach einer gewissen Verzögerungszeit ab. Dies geschieht beispielsweise dann, wenn das Gerät nicht benutzt wird und dieses hierbei in einer horizontalen Lage, d.h. in einer üblichen Arbeitslage verweilt.

Wird hingegen das Gerät angehoben oder in eine Überkopfstellung verschwenkt, so fällt das Bewegungsteil 73 mit der Kugel 72 gegen die Innenwandung der Röhre 67 und schließt somit den Stromkreis, was zu einem entsprechenden Stromimpuls zum Einschalten des Elektromotors 38 führt.

Auch in diesem Ausführungsbeispiel führt ein Verschwenken des Gehäusesteiles 52 zu einem sofortigen Einschalten des Elektromotors 38. Der Beschleunigungssensor 50 verschwenkt entsprechend der Federkraft der Druckfeder 64 derart, daß die Kugel 72 des Bewegungsteils 73 gegen die Innenwandung der Röhre 67 tritt, womit der Stromkreis geschlossen wird.

Entsprechend dem zuvor beschriebenen Ausführungsbeispiel besitzt auch hier der Beschleunigungssensor 50 die Funktion eines Gehäuse-Öffnungssensors.

Es ist weiterhin denkbar, einen derartig ausgebildeten Beschleunigungssensor 50 durch Einschieben einer nicht leitenden Hülse zwischen dem Bewegungsteil 73 und der Röhre 67 zu deaktivieren. Dies kann mechanisch geschehen, sobald das Gerät aus der horizontalen Lage angehoben oder verschwenkt wird. Der Stromkreis ist danach in konsequenter Weise unterbrochen. Die Deaktivierung des Beschleunigungssensors 50 bzw. hier des lagesensors kann auch durch ein Öffnen des Gehäuseteiles 52 auslösbar sein.

In den zuvor beschriebenen Ausführungsbeispielen ist es auch denkbar, die Überwachung der Nichtbenutzung des Gerätes durch Erfassung des Motorstromes des Elektromotors 38 des Gerätevorsatzes 34 zu realisieren. Geht der Motorstrom des Elektromotors 38 des Gerätevorsatzes 34 gegen Null, bspw. bei Blockieren der Bürstenwalze 12 oder auch durch eine Steuerung des Radsensors 31 bzw. des Beschleunigungssensors 50, so wird entweder die Relaisschaltung 37 veranlaßt auf den ohmschen Widerstand R4 zu schalten oder der Phasenanschnitt-Controllers 45 auf die über die Vorrichtung 48 voreingestellte Minimalleistung zu schalten.

## Patentansprüche

1. Staubsauger mit einem, eine Saugleistung erbringenden Elektromotor (35), wobei bei einer durch. Stillstand des Gerätes (1) angezeigten Nichtbenutzung eine Verhinderung der Leistung des Elektromotors (35) auf eine Minimalleistung erfolgt, **dadurch gekennzeichnet, dass** die bei einer durch Stillstand des Gerätes (1) angezeigte Nichtbenutzung durch einen Beschleunigungssensor (50) erfasst wird und die Verminderung der Leistung nach Ablauf einer vordefinierten Verzögerung erfolgt.

2. Staubsauger nach Anspruch 1, **dadurch gekennzeichnet, dass** die Verminderung der Leistung des Elektromotors (35) weiter in Abhängigkeit einer Signals eines Schmutzsensors erfolgt.

3. Staubsauger nach einem oder mehreren der vorhergehenden Ansprüche, **dadurch gekennzeichnet, dass** die Nichtbenutzung durch eine Überwachung einer Laufrolle (30) des Gerätes (1) erfassbar ist.

4. Staubsauger nach einem oder mehreren der vorhergehenden Ansprüche, **dadurch gekennzeichnet, dass** bei Benutzung eines motorgetriebenen Vorsatzgerätes (34) eine angezeigte Nichtbenutzung eine Abschaltung des Elektromotors (38) des Vorsatzgerätes (34) bewirkt.

5. Staubsaugers nach einem oder mehreren der vorhergehenden Ansprüche, **dadurch gekennzeichnet, dass** in dem Beschleunigungssensor (50) ein Lagesensor integriert ist.

6. Staubsauger nach einem oder mehreren der vorhergehenden Ansprüche, **dadurch gekennzeichnet, dass** der Beschleunigungssensor (50) bzw. der Lagesensor zugleich ein Gehäuse-Öffnungssensor ist.

7. Staubsauger nach einem oder mehreren der vorhergehenden Ansprüche, **dadurch gekennzeichnet, dass** der Beschleunigungssensor (50) bzw. der Lagesensor durch eine Öffnung des Gerätes (34) deaktivierbar ist.

8. Staubsauger nach einem oder mehreren der vorhergehenden Ansprüche, **dadurch gekennzeichnet, dass** der Beschleunigungssensor (50) zur Bildung des Gehäuse-Öffnungssensors schwenkbeweglich gelagert ist.

9. Staubsauger nach einem oder mehreren der vorhergehenden Ansprüche, **dadurch gekennzeichnet, dass** der Beschleunigungssensor (50) in eine Schwenkstellung vorgespannt ist, welche Vorspannung durch Öffnung eines Gehäuseteiles (52) auslösbar ist.

10. Staubsauger nach einem oder mehreren der vorhergehenden Ansprüche, **dadurch gekennzeichnet, dass** die Abschaltung zeitverzögert erfolgt.

11. Staubsauger nach einem oder mehreren der vorhergehenden Ansprüche, **dadurch gekennzeichnet, dass** die Einschaltung des Elektromotors (38) praktisch ohne Verzögerung erfolgt.

12. Staubsauger nach einem oder mehreren der vorhergehenden Ansprüche, **dadurch gekennzeichnet, dass** der Beschleunigungssensor (50) eine Sensor-Schale (55) aufweist, auf welcher ein Rollkörper (62) bewegbar ist und dass eine Lage des Rollkörpers (62) im tiefsten Bereich (B) der Schale (55) ein Abschalten des Elektromotors (38) bewirkt.

13. Staubsauger nach einem oder mehreren der vorhergehenden Ansprüche, **dadurch gekennzeichnet, dass** der Rollkörper (62) eine Kugel (63) ist.

14. Staubsauger nach einem oder mehreren der vorhergehenden Ansprüche, **dadurch gekennzeichnet, dass** die tiefste Lage der Kugel (63) über eine Lichtschranke (50) erfassbar ist.

15. Staubsauger nach einem oder mehreren der vorhergehenden Ansprüche, **dadurch gekennzeichnet, dass** die Schale (55) im Wesentlichen rand und oberseitig geschlossen ist.

16. Staubsauger nach einem oder mehreren der vorhergehenden Ansprüche, **dadurch gekennzeichnet, dass** der Beschleunigungssensor (50) bzw. der Lagesensor als vertikal ausgerichtete Röhre (67) ausgebildet ist, mit einem darin pendelbeweglich gelagerten Bewegungsteil (73).

17. Staubsauger nach einem oder mehreren der vorhergehenden Ansprüche, **dadurch gekennzeichnet, dass** das Bewegungsteil (73) klöppelartig aufgehängt ist.

18. Staubsauger nach einem oder mehreren der vorhergehenden Ansprüche, **dadurch gekennzeichnet, dass** das Bewegungsteil (73) und die Röhre (67) jeweils elektrisch leitend sind.

19. Staubsauger nach einem oder mehreren der vorhergehenden Ansprüche, **dadurch gekennzeichnet, dass** das Bewegungsteil (73) und die Röhre (67) in einem Stromkreis integriert sind, der durch Berührung der Teile (73) und (67) schließbar ist.

20. Staubsauger nach einem oder mehreren der vorhergehenden Ansprüche, **dadurch gekennzeichnet, dass** der Beschleunigungssensor (50) durch Einschieben einer nicht leitenden Hülse zwischen dem Bewegungsteil (73) und der Röhre (67) deaktivierbar ist.

21. Staubsauger nach einem oder mehreren der vorhergehenden Ansprüche **dadurch gekennzeichnet, dass** die Deaktivierung durch Öffnen eines Gehäuseteiles (52) auslösbar ist.

22. Staubsauger nach einem oder mehreren der vorhergehenden Ansprüche **dadurch gekennzeichnet, dass** bei Benutzung eines motorgetriebenen Vorsatzgerätes (34) weiter die Überwachung durch eine Erfassung des Motorstromes des Elektromotors (38) des Vorsatzgerätes (34) erfolgt.

23. Staubsauger nach einem oder mehreren der vorhergehenden Ansprüche, **dadurch gekennzeichnet, dass** bei einer Einschaltung des Staubsaugers (1) die Stromaufnahme des Elektromotors (35) derart einstellbar gesteuert ist, dass ein voreinstellbarer Leistungswert mit zeitlicher Verzögerung erreicht wird.

24. Staubsauger nach einem oder mehreren der vorhergehenden Ansprüche, **dadurch gekennzeichnet, dass** die Einstellung der zeitlichen Verzögerung nur geräteintern durchführbar ist.

## Claims

1. Vacuum cleaner with an electric motor (35), producing suction power, wherein, in the case of non-usage indicated by stopping of the appliance (1), there is a reduction in the power of the electric motor (35) to a minimum power, **characterised in that** the non-usage indicated by stopping of the appliance (1) is detected by an acceleration sensor (50) and the reduction in power takes place after a predefined delay has elapsed.

2. Vacuum cleaner according to claim 1, **characterised in that** the reduction in power of the electric motor (35) takes place further as a function of a signal of a dirt sensor.

3. Vacuum cleaner according to one or more of the preceding claims, **characterised in that** non-usage can be detected by monitoring a castor (30) of the appliance (1).

4. Vacuum cleaner according to one or more of the preceding claims, **characterised in that**, if a motor-driven attachment appliance (34) is used, indicated non-usage causes the electric motor (38) of the attachment appliance (34) to be switched off.

5. Vacuum cleaner according to one or more of the preceding claims, **characterised in that** a position sensor is integrated in the acceleration sensor (50).

6. Vacuum cleaner according to one or more of the preceding claims, **characterised in that** the acceleration sensor (50) or the position sensor is simultaneously a housing opening sensor.

7. Vacuum cleaner according to one or more of the preceding claims, **characterised in that** the acceleration sensor (50) or the position sensor can be deactivated by opening the appliance (34).

8. Vacuum cleaner according to one or more of the preceding claims, **characterised in that** the acceleration sensor (50) is held as movable by swivelling to form the housing opening sensor.

9. Vacuum cleaner according to one or more of the preceding claims, **characterised in that** the acceleration sensor (50) is biased into a swivelling position, said bias being triggerable by opening a housing part (52).

10. Vacuum cleaner according to one or more of the preceding claims, **characterised in that** switching off is done with a time delay.

11. Vacuum cleaner according to one or more of the preceding claims, **characterised in that** switching on the electric motor (38) is done practically without delay.

12. Vacuum cleaner according to one or more of the preceding claims, **characterised in that** the acceleration sensor (50) has a sensor shell (55) on which a roller body (62) is movable and **in that** a position of the roller body (62) in the lowest area (B) of the shell (55) causes the electric motor (38) to be switched off.

13. Vacuum cleaner according to one or more of the preceding claims, **characterised in that** the roller body (62) is a ball (63).

14. Vacuum cleaner according to one or more of the preceding claims, **characterised in that** the lowest position of the ball (63) can be detected via a light barrier (50).

15. Vacuum cleaner according to one or more of the preceding claims, **characterised in that** the shell (55) is substantially closed on the edge and upper sides.

16. Vacuum cleaner according to one or more of the preceding claims, **characterised in that** the acceleration sensor (50) or the position sensor is constructed as a vertically aligned conduit (67), with a moving part (73) held therein in reciprocating motion.

17. Vacuum cleaner according to one or more of the preceding claims, **characterised in that** the moving part (73) is suspended like a clapper.

18. Vacuum cleaner according to one or more of the preceding claims, **characterised in that** the moving part (73) and the conduit (67) are electrically conductive in each case.

19. Vacuum cleaner according to one or more of the preceding claims, **characterised in that** the moving part (73) and the conduit (67) are integrated in a current circuit which can be closed by touching parts (73) and (67).

20. Vacuum cleaner according to one or more of the preceding claims, **characterised in that** the acceleration sensor (50) can be deactivated by inserting a non-conductive sleeve between the moving part (73) and the conduit (67).

21. Vacuum cleaner according to one or more of the preceding claims, **characterised in that** deactivation can be triggered by opening a housing part (52).

22. Vacuum cleaner according to one or more of the preceding claims, **characterised in that**, if a motor-driven attachment appliance (34) is used, monitoring takes place further by detecting the motor current of the electric motor (38) of the attachment appliance (34).

23. Vacuum cleaner according to one or more of the preceding claims, **characterised in that**, when the vacuum cleaner (1) is switched on, the current consumption of the electric motor (35) is controlled as settable in such a way that a presettable power value with time delay is achieved.

24. Vacuum cleaner according to one or more of the preceding claims, **characterised in that** the setting of the time delay can be carried out inside the appliance only.

## Revendications

1. Aspirateur comportant un moteur électrique (35) générant une puissance d'aspiration, la puissance du moteur électrique (35) étant diminuée à une puissance minimale lors d'une non-utilisation signalée par une immobilisation de l'appareil (1), **caractérisé en ce que** la non-utilisation signalée par une immobilisation de l'appareil (1) est détectée par un capteur d'accélération (50) et la diminution de la puissance est assurée à la fin d'une temporisation définie.

2. Aspirateur selon la revendication 1, **caractérisé en ce que** la diminution de la puissance du moteur électrique (35) est assurée, en outre, en fonction d'un signal d'un capteur de poussière.

3. Aspirateur selon une ou plusieurs des revendications précédentes, **caractérisé en ce que** la non-utilisation peut être détectée par une surveillance d'une roulette (30) de l'appareil (1).

4. Aspirateur selon une ou plusieurs des revendications précédentes, **caractérisé en ce que**, lors de l'utilisation d'un accessoire adaptable (34) entraîné par un moteur, une non-utilisation signalée entraîne une déconnexion du moteur électrique (35) de l'accessoire adaptable (34).

5. Aspirateur selon une ou plusieurs des revendications précédentes, **caractérisé en ce qu'**un capteur de position est intégré dans le capteur d'accélération (50).

6. Aspirateur selon une ou plusieurs des revendications précédentes, **caractérisé en ce que** le capteur d'accélération (50) ou le capteur de position est en même temps un capteur d'ouverture du boîtier.

7. Aspirateur selon une ou plusieurs des revendications précédentes, **caractérisé en ce que** le capteur d'accélération (50) ou le capteur de position peut être désactivé par une ouverture de l'accessoire (34).

8. Aspirateur selon une ou plusieurs des revendications précédentes, **caractérisé en ce que** le capteur d'accélération (50) est monté pivotant en vue de former le capteur d'ouverture du boîtier.

9. Aspirateur selon une ou plusieurs des revendications précédentes, **caractérisé en ce que** le capteur d'accélération (50) est précontraint dans une position de pivotement, laquelle précontrainte peut être déclenchée par l'ouverture d'une partie du boîtier (52).

10. Aspirateur selon une ou plusieurs des revendications précédentes, **caractérisé en ce que** la déconnexion est effectuée de manière retardée dans le temps.

11. Aspirateur selon une ou plusieurs des revendications précédentes, **caractérisé en ce que** la connexion du moteur électrique (38) s'effectue pratiquement sans retard.

12. Aspirateur selon une ou plusieurs des revendications précédentes, **caractérisé en ce que** le capteur d'accélération (50) comporte une coque (55) de capteur, sur laquelle peut se déplacer un corps de roulement (62) et **en ce qu'**une position du corps de roulement (62) dans la zone (B) la plus profonde de la coque (55) entraîne une déconnexion du moteur électrique (38).

13. Aspirateur selon une ou plusieurs des revendications précédentes, **caractérisé en ce que** le corps de roulement (62) est une bille (63).

14. Aspirateur selon une ou plusieurs des revendications précédentes, **caractérisé en ce que** la position la plus profonde de la bille (63) peut être détectée par une barrière photoélectrique (50).

15. Aspirateur selon une ou plusieurs des revendications précédentes, **caractérisé en ce que** la coque (55) est sensiblement fermée sur le bord et le dessus.

16. Aspirateur selon une ou plusieurs des revendications précédentes, **caractérisé en ce que** le capteur d'accélération (50) ou le capteur de position est réalisé sous forme de tube (67) vertical comportant un élément mobile (73) monté dans celui-ci de manière à effectuer un mouvement pendulaire.

17. Aspirateur selon une ou plusieurs des revendications précédentes, **caractérisé en ce que** l'élément mobile (73) est suspendu à la manière d'un battant.

18. Aspirateur selon une ou plusieurs des revendications précédentes, **caractérisé en ce que** l'élément mobile (73) et le tube (67) sont chacun électro-conducteurs.

19. Aspirateur selon une ou plusieurs des revendications précédentes, **caractérisé en ce que** l'élément mobile (73) et le tube (67) sont intégrés dans un circuit électrique qui peut se fermer sous l'effet du contact des pièces (73) et (67).

20. Aspirateur selon une ou plusieurs des revendications précédentes, **caractérisé en ce que** le capteur d'accélération (50) peut être désactivé par la mise en place d'une gaine non conductrice entre l'élément mobile (73) et le tube (67).

21. Aspirateur selon une ou plusieurs des revendications précédentes, **caractérisé en ce que** la désactivation peut être déclenchée par l'ouverture d'une partie du boîtier (52).

22. Aspirateur selon une ou plusieurs des revendications précédentes, **caractérisé en ce que**, en cas d'utilisation d'un accessoire adaptable (34), entraîné par un moteur, la surveillance est assurée en outre par une détection du courant du moteur électrique (38) de l'accessoire adaptable (34).

23. Aspirateur selon une ou plusieurs des revendications précédentes, **caractérisé en ce que**, lors de la mise en marche de l'aspirateur (1), la consommation de courant du moteur électrique (35) peut être commandée de manière réglable, de telle sorte qu'une valeur de puissance prédéfinissable est atteinte avec un retard dans le temps.

24. Aspirateur selon une ou plusieurs des revendications précédentes, **caractérisé en ce que** le réglage du retard dans le temps ne peut être effectué qu'à l'intérieur de l'aspirateur.
